# EUROPÄISCHE PATENTSCHRIFT

(11) **EP 3 382 352 B1**
(45) Veröffentlichungstag und Bekanntmachung des Hinweises auf die Patenterteilung: **30.10.2019**
(21) Anmeldenummer: 18163403.1
(22) Anmeldetag: 22.03.2018
(51) Int. Cl.: G01F 3/10

(54) **OVALRAD-DURCHFLUSSMESSER, VERFAHREN ZUM MESSEN EINES DURCHFLUSSES UND DOSIERSYSTEM**
OVAL WHEEL FLOW METER, METHOD OF FLOW MEASUREMENT AND METERING SYSTEM
DÉBITMÈTRE À ROUE OVALE, PROCÉDÉ DE MESURE D'UN FLUX ET SYSTÈME DE DOSAGE

(30) Priorität: 30.03.2017 DE 102017106838
(43) Veröffentlichungstag der Anmeldung: 03.10.2018
(73) Patentinhaber: Miele & Cie. KG, 33332 Gütersloh (DE)
(72) Erfinder: Matzner, Tobias, 33729 Bielefeld (DE); Turkiewicz, Michael, 33613 Bielefeld (DE)

(56) Entgegenhaltungen:
- EP-A2- 0 491 246
- DE-U- 6 609 610
- DE-U1- 29 503 221

## Beschreibung

Die Erfindung betrifft einen Ovalrad-Durchflussmesser zum Messen eines Durchflusses zumindest eines Prozessmediums in einem Dosiersystem, ein Verfahren zum Messen eines Durchflusses zumindest eines Prozessmediums in einem Dosiersystem und ein Dosiersystem.

Die EP 0491246 A2, die DE 29503221 U1 und die DE 6609610 U offenbaren jeweils einen Durchflussmesser zum Messen eines Durchflusses einer Flüssigkeit. Sie offenbaren auch, dass der Durchflussmesser ein Gehäuse, in dem eine Messkammer, ein Einlassabschnitt und ein Auslassabschnitt ausgeformt sind, zwei in der Messkammer zwischen dem Einlassabschnitt und dem Auslassabschnitt drehbar gelagerte Zahnräder und eine Erfassungseinrichtung zum Erfassen einer Stellung der Zahnräder aufweist.

Beispielsweise bei einer Flüssigdosierung von Prozessmedien bei thermischen und chemischen Reinigungs- und Desinfektionsgeräten oder dergleichen sind, insbesondere nach DIN EN ISO 15883, gewisse Anforderungen an eine Überwachung bzw. Genauigkeit gestellt. Bei einer solchen Flüssigdosierung können Ovalradzähler bzw. Ovalrad-Durchflussmesser zum Einsatz kommen.

Der Erfindung stellt sich die Aufgabe, einen verbesserten Ovalrad-Durchflussmesser zum Messen eines Durchflusses zumindest eines Prozessmediums in einem Dosiersystem, ein verbessertes Verfahren zum Messen eines Durchflusses zumindest eines Prozessmediums in einem Dosiersystem und ein verbessertes Dosiersystem bereitzustellen.

Erfindungsgemäß wird diese Aufgabe durch einen Ovalrad-Durchflussmesser zum Messen eines Durchflusses zumindest eines Prozessmediums in einem Dosiersystem, durch ein Verfahren zum Messen eines Durchflusses zumindest eines Prozessmediums in einem Dosiersystem und durch ein Dosiersystem mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass ein Ovalradzähler bzw. Ovalrad-Durchflussmesser mit Gaserkennung bzw. Lufterkennung bereitgestellt werden kann und somit ein volumetrischer Durchflussmesser, der eine Kombination aus viskositätsunabhängiger Durchflussmessung und hinreichender Erkennung von Gasblasen bzw. Luftblasen ermöglicht, realisiert werden kann. In Systemen, in denen beispielsweise flüssige Medien gefördert werden, ein gefördertes Volumen bestimmt werden soll und z. B. in einem Fehlerfall Gas oder Gasblasen, insbesondere Luft bzw. Luftblasen, auftreten können, kann somit ein Ovalradzähler als Durchflussmesser verwendet werden, ohne dass bei hoher Messgenauigkeit weitere Sensoren zur Erkennung von Gasblasen bzw. Luftblasen in dem geförderten Medium notwendig wären. Es kann somit eine Dosierüberwachung durch einen volumetrischen Durchflusssensor erfolgen, wobei etwaige Anforderungen, insbesondere aus der Norm DIN EN ISO 15883, zuverlässig erfüllt werden können. Insbesondere kann hierbei ein gefördertes Volumen genau und viskositätsunabhängig gemessen und zusätzlich oder alternativ einer Gerätesteuerung über eine Messgröße bzw. über Impulse vorgegeben werden. Somit kann auch beispielsweise auf Flügelradzähler verzichtet werden, die eine hohe Abhängigkeit der Messgröße von einer Medienviskosität zeigen. Durch enge maßliche Toleranzen in der Messkammer können Ovalradzähler bzw. Ovalrad-Durchflussmesser beispielsweise darauf ausgelegt sein, eine hohe Messgenauigkeit bei einer ebenfalls hohen Viskositätsunabhängigkeit zu bieten. Vorteilhafterweise kann jedoch erreicht werden, dass auch gasförmige Anteile in flüssigen Medien erkannt werden können und somit sicher beispielsweise auf Luftblasen bzw. Luft im Dosiersystem reagiert werden kann. Somit kann der Ovalradzähler bzw. Ovalrad-Durchflussmesser empfindlich und genau auf das Medium Luft gegenüber einem flüssigen Medium reagieren, sodass auf einen zusätzlichen Sensor zur Luftblasenerkennung verzichtet werden kann.

Es wird ein Ovalrad-Durchflussmesser zum Messen eines Durchflusses zumindest eines Prozessmediums in einem Dosiersystem vorgestellt, wobei der Ovalrad-Durchflussmesser ein Gehäuse, in dem eine Messkammer, ein Einlassabschnitt und ein Auslassabschnitt ausgeformt sind, zwei in der Messkammer zwischen dem Einlassabschnitt und dem Auslassabschnitt drehbar gelagerte Ovalräder und eine Erfassungseinrichtung zum Erfassen einer Stellung der Ovalräder aufweist, wobei in zumindest einem Gehäuseteil oder Teilabschnitt des Gehäuses eine der Messkammer zugewandte Rille ausgeformt ist, wobei die Rille zwischen Drehachsen der Ovalräder ausgeformt ist, wobei sich eine Längsachse der Rille entlang einer den Einlassabschnitt mit den Auslassabschnitt verbindenden Durchflussmesserlängsachse zwischen dem Einlassabschnitt und dem Auslassabschnitt erstreckt.

Durch die Rille (die auch als Nut bezeichnet werden kann) ist die Messkammer erweitert oder vergrößert. Die Ovalräder können ineinandergreifend angeordnet sein. Auch wenn der beschriebene Ansatz anhand eines Haushaltgerätes beschrieben wird, kann der hier beschriebene Ovalrad-Durchflussmesser entsprechend im Zusammenhang mit einem gewerblichen oder professionellen Gerät, beispielsweise einem medizinischen Gerät, wie einem Reinigungs- oder Desinfektionsgerät, einem Kleinsterilisator, einem Großraumdesinfektor oder einer Container-Waschanlage eingesetzt werden.

Gemäß einer Ausführungsform kann die Rille mittig zwischen den Drehachsen der Ovalräder ausgeformt sein. Eine solche Ausführungsform bietet den Vorteil, dass in einem flüssigen Medium vorhandenes Gas oder vorhandene Luft einfach und sicher an den Ovalrädern vorbei geleitet werden kann.

Die Längenabmessung der Rille ist erfindungsgemäß so gewählt, dass durch die Rille eine gasdurchlässige Verbindung zwischen dem Einlassabschnitt und dem Auslassabschnitt bereitgestellt ist. Insbesondere kann eine Längenabmessung der Rille so gewählt sein, dass durch die Rille unabhängig von der Stellung der Ovalräder eine gasdurchlässige Verbindung zwischen dem Einlassabschnitt und dem Auslassabschnitt bereitgestellt ist. Eine solche Ausführungsform bietet den Vorteil, dass eine zuverlässige Umgehungsmöglichkeit zum Vorbeileiten von Gas oder Luft an den Ovalrädern realisiert werden kann.

Ferner kann die Rille in einem Deckelteil und zusätzlich oder alternativ in einem Bodenteil des Gehäuses ausgeformt sein. Hierbei kann der Deckelteil und zusätzlich oder alternativ der Bodenteil einen Teilabschnitt des Gehäuses oder ein Teil eines mehrteilig ausgeführten Gehäuses repräsentieren. Eine solche Ausführungsform bietet den Vorteil, dass je nach gefördertem Medium bzw. Fördereigenschaft eine geeignete Positionierung der Rille als Gas-Bypass vorgenommen werden kann.

Es wird auch ein Verfahren zum Herstellen eines Ovalrad-Durchflussmessers zum Messen eines Durchflusses zumindest eines Prozessmediums in einem Dosiersystem vorgestellt, wobei das Verfahren zumindest folgende Schritte aufweist:
Bereitstellen eines Gehäuses, in dem eine Messkammer, ein Einlassabschnitt und ein Auslassabschnitt ausgeformt sind, zwei in der Messkammer zwischen dem Einlassabschnitt und dem Auslassabschnitt drehbar gelagerter Ovalräder und einer Erfassungseinrichtung zum Erfassen einer Stellung der Ovalräder; und
Ausformen einer der Messkammer zugewandten Rille in zumindest einem Gehäuseteil oder Teilabschnitt des Gehäuses, wobei die Rille zwischen Drehachsen der Ovalräder ausgeformt wird, wobei sich eine Längsachse der Rille entlang einer Durchflussachse des Prozessmediums durch die Messkammer zwischen dem Einlassabschnitt und dem Auslassabschnitt erstreckt.

Durch Ausführen des Verfahrens ist eine Ausführungsform des vorstehend genannten Ovalrad-Durchflussmessers herstellbar.

Gemäß einer Ausführungsform kann im Schritt des Ausformens die Rille mit von einer Viskosität und zusätzlich oder alternativ von einem Volumenstrom des zumindest einen Prozessmediums abhängigen Abmessungen ausgeformt werden. Eine solche Ausführungsform bietet den Vorteil, dass ein auf zur Verwendung beabsichtigte Medien abgestimmter Gas-Bypass zuverlässig und einfach geschaffen werden kann.

Es wird ferner ein Verfahren zum Messen eines Durchflusses zumindest eines Prozessmediums in einem Dosiersystem vorgestellt, wobei das Verfahren zumindest folgende Schritte aufweist:
Bewirken einer Förderung zumindest eines Prozessmediums durch eine Ausführungsform des vorstehend genannten Ovalrad-Durchflussmessers; und
Auswerten eines Messsignals von der Erfassungseinrichtung des Ovalrad-Durchflussmessers, wobei das Messsignal eine dem Durchfluss des zumindest einen Prozessmediums zugeordnete Drehbewegung der Ovalräder repräsentiert.

Bei dem Verfahren zum Messen kann eine Ausführungsform des vorstehend genannten Ovalrad-Durchflussmessers vorteilhaft eingesetzt oder verwendet werden. Auch kann das Verfahren zum Messen unter Verwendung einer nachfolgend beschriebenen Vorrichtung vorteilhaft ausgeführt werden.

Gemäß einer Ausführungsform kann im Schritt des Auswertens anhand eines Abfalls des Messsignals bei konstanter Fördermenge ein Vorhandensein von Gas in einem flüssigen Prozessmedium erkannt werden. Eine solche Ausführungsform bietet den Vorteil, dass insbesondere unabsichtlich mitgeführtes Gas in dem Prozessmedium sicher detektiert werden kann und somit auch eine Fehlererkennung realisiert werden kann.

Der hier vorgestellte Ansatz schafft ferner eine Steuervorrichtung, die ausgebildet ist, um die Schritte einer Variante eines hier vorgestellten Verfahrens zum Messen in entsprechenden Einrichtungen durchzuführen, anzusteuern bzw. umzusetzen. Auch durch diese Ausführungsvariante der Erfindung in Form einer Steuervorrichtung kann die der Erfindung zugrunde liegende Aufgabe schnell und effizient gelöst werden.

Die Steuervorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens zum Messen nach einer der vorstehend beschriebenen Ausführungsformen verwendet werden.

Es wird zudem ein Dosiersystem vorgestellt, wobei das Dosiersystem zumindest folgende Merkmale aufweist:
eine Aufnahmeschnittstelle zu mindestens einem Vorratsbehälter zum Beinhalten von Prozessmedium;
eine Abgabeschnittstelle zu einem Prozessraum zum Verarbeiten von Prozessmedium;
eine Dosierpumpe zum Fördern von Prozessmedium von der Aufnahmeschnittstelle zu der Abgabeschnittstelle ;
eine Ausführungsform des vorstehend genannten Ovalrad-Durchflussmessers, wobei der Ovalrad-Durchflussmesser strömungsmechanisch mit der Aufnahmeschnittstelle und der Abgabeschnittstelle verbindbar oder verbunden ist; und
eine Ausführungsform der vorstehend genannten Steuervorrichtung, wobei die Steuervorrichtung zumindest mit dem Ovalrad-Durchflussmesser signalübertragungsfähig verbindbar oder verbunden ist.

Bei dem Dosiersystem können somit eine Ausführungsform des vorstehend genannten Ovalrad-Durchflussmessers und eine Ausführungsform der vorstehend genannten Steuervorrichtung vorteilhaft eingesetzt oder verwendet werden. Die Aufnahmeschnittstelle kann mit dem Einlassabschnitt des Ovalrad-Durchflussmessers verbindbar sein. Die Abgabeschnittstelle kann mit dem Auslassabschnitt des Ovalrad-Durchflussmessers verbindbar sein.

Ein Ausführungsbeispiel der Erfindung ist in den Zeichnungen rein schematisch dargestellt und wird nachfolgend näher beschrieben. Es zeigt
- Figuren 1 - 4: einen Ovalrad-Durchflussmesser gemäß einem Ausführungsbeispiel der vorliegenden Erfindung;
- Figur 5: ein Dosiersystem gemäß einem Ausführungsbeispiel der vorliegenden Erfindung;
- Figur 6: ein Verfahren zum Herstellen gemäß einem Ausführungsbeispiel der vorliegenden Erfindung; und
- Figur 7: ein Verfahren zum Messen gemäß einem Ausführungsbeispiel der vorliegenden Erfindung.

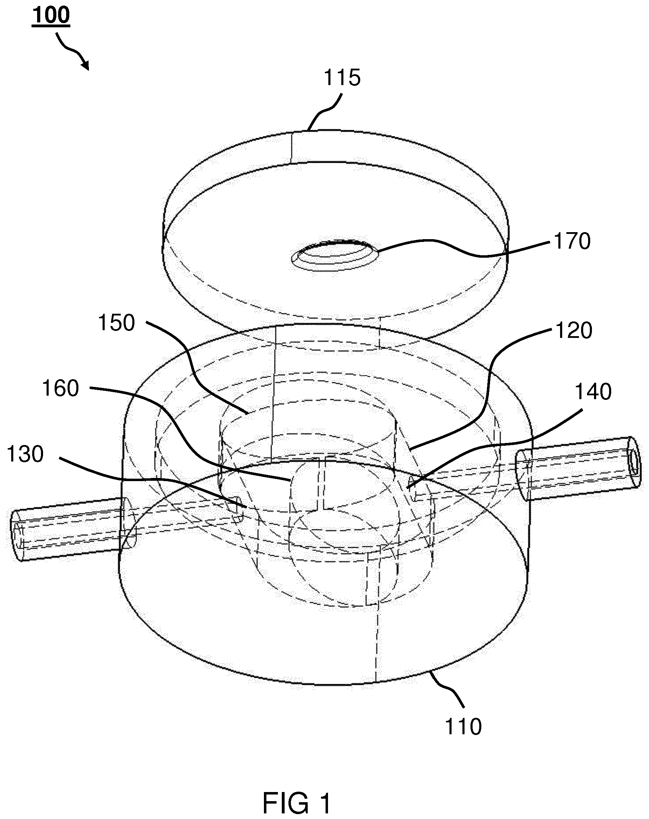

Figur 1 zeigt einen Ovalrad-Durchflussmesser 100 gemäß einem Ausführungsbeispiel der vorliegenden Erfindung. Der Ovalrad-Durchflussmesser 100 ist ausgebildet, um einen Durchfluss zumindest eines Prozessmediums in einem Dosiersystem zu messen bzw. eine Messung desselben zu ermöglichen. Der Ovalrad-Durchflussmesser 100 weist ein Gehäuse 110 und 115, eine Messkammer 120, einen Einlassabschnitt 130, einen Auslassabschnitt 140, zwei Ovalräder 150 und 160 und eine Rille 170 auf.

Das Gehäuse 110 und 115 ist gemäß dem in Figur 1 dargestellten Ausführungsbeispiel der vorliegenden Erfindung als ein zweiteiliges Gehäuse ausgeführt. Es sind hierbei ein Gehäusekorpus 110 ein Gehäusedeckel 115 bzw. Deckelteil 115 vorgesehen. In dem Gehäusekorpus 110 sind die Messkammer 120, der Einlassabschnitt 130 und der Auslassabschnitt 140 ausgeformt. Die Messkammer 120 ist zwischen dem Einlassabschnitt 130 und dem Auslassabschnitt 140 angeordnet. In der Messkammer 120 sind die zwei Ovalräder 150 und 160 zwischen dem Einlassabschnitt 130 und dem Auslassabschnitt 140 drehbar gelagert und vorzugsweise mit in den Figuren aus Gründen der Übersichtlichkeit nicht gezeigten Verzahnungen ineinandergreifend angeordnet. Somit kann das zumindest eine Prozessmedium über den Einlassabschnitt 130 durch die Messkammer 120 zu dem Auslassabschnitt 140 strömen, wobei die Ovalräder 150 und 160 durch Verdrängung in gegenläufige Drehbewegung versetzt werden.

Auch wenn es in Figur 1 nicht explizit gezeigt ist, weist der Ovalrad-Durchflussmesser 100 auch eine Erfassungseinrichtung zum Erfassen einer Stellung zumindest eines der Ovalräder 150 und 160 auf.

Die Rille 170 ist in zumindest einem Gehäuseteil oder Teilabschnitt des Gehäuses 110 und 115 ausgeformt. Dabei ist die Rille 170 der Messkammer 120 zugewandt bzw. repräsentiert eine Erweiterung oder Vergrößerung der Messkammer 120. Die Rille 170 ist zwischen Drehachsen der Ovalräder 150 und 160 ausgeformt bzw. angeordnet. Eine Längsachse der Rille 170 erstreckt sich entlang einer Durchflussachse des Prozessmediums durch die Messkammer 120 zwischen dem Einlassabschnitt 130 und dem Auslassabschnitt 140 oder anders ausgedrückt, sie erstreckt sich entlang einer den Einlassabschnitt (130) mit den Auslassabschnitt (140) verbindenden Durchflussmesserlängsachse zwischen dem Einlassabschnitt (130) und dem Auslassabschnitt (140).

Gemäß dem in Figur 1 dargestellten Ausführungsbeispiel der vorliegenden Erfindung ist die Rille in dem Gehäusedeckel 115 bzw. Deckelteil 115 ausgeformt. Eine Längenabmessung der Rille 170 ist dabei so gewählt, dass - vorzugsweise unabhängig von der Stellung der Ovalräder 150 und 160 - eine gasdurchlässige Verbindung zwischen dem Einlassabschnitt 130 und dem Auslassabschnitt 140 durch die Rille 170 hindurch bereitgestellt ist.

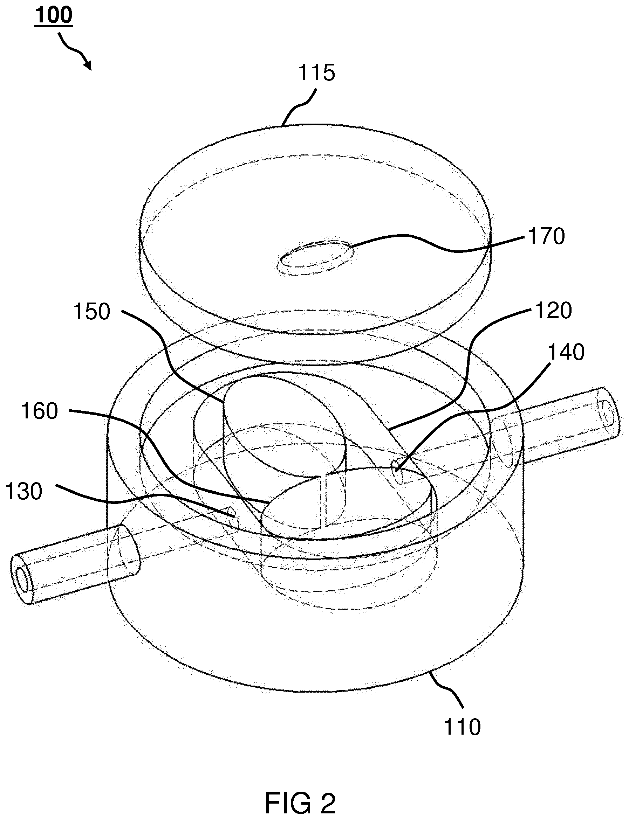

Figur 2 zeigt den Ovalrad-Durchflussmesser 100 aus Figur 1. Dabei ist in Figur 2 der Ovalrad-Durchflussmesser 100 in einer relativ zu Figur 1 veränderten Perspektive und/oder Darstellungsweise gezeigt.

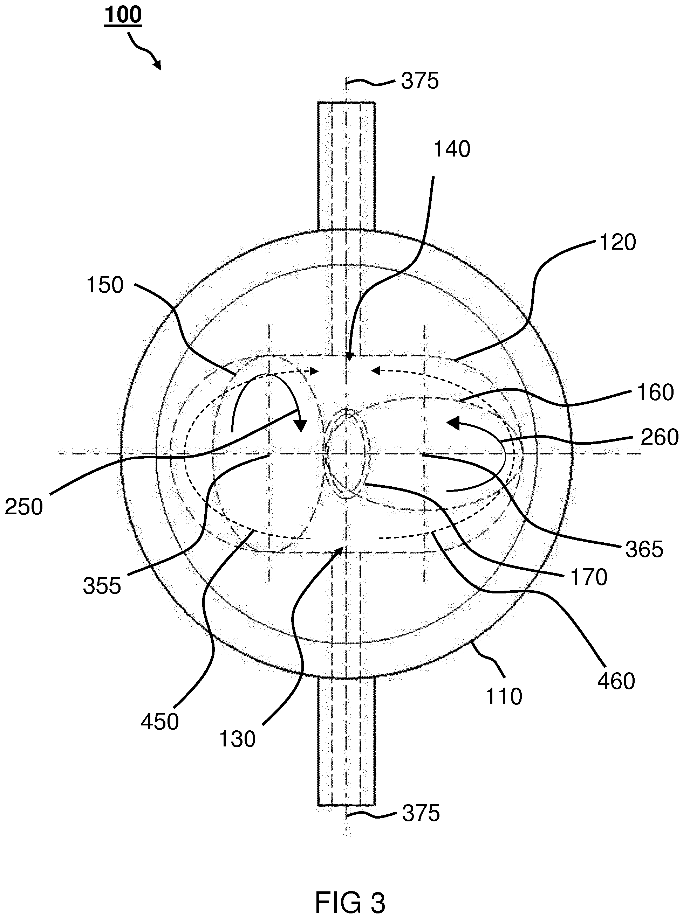

Figur 3 zeigt den Ovalrad-Durchflussmesser 100 aus Figur 1 bzw. Figur 2. Dabei ist in Figur 3 der Ovalrad-Durchflussmesser 100 in einer relativ zu Figur 1 bzw. Figur 2 veränderten Perspektive und/oder Darstellungsweise gezeigt. Genauer gesagt ist der Ovalrad-Durchflussmesser 100 in Figur 3 in einer Darstellung gezeigt, die eine Draufsicht repräsentiert oder einer Draufsicht ähnelt. Hierbei ist der Gehäusedeckel bzw. Deckelteil lediglich implizit dargestellt. Zusätzlich sind in der Darstellung von Figur 3 Drehachsen 355 und 365 der Ovalräder 150 und 160 sowie eine Längsachse 375 der Rille 170 eingezeichnet. Die Pfeile 250 und 260 stellen jeweils die Drehrichtung der Ovalräder 150 und 250 dar, wenn Prozessmedium durch den Ovalrad-Durchflussmesser 100 in Durchflussrichtung, d.h. vom Einlassabschnitt 130 zum Auslassabschnitt 140 strömt.

Dabei ist in Figur 3 explizit erkennbar, dass die Rille 170 zwischen den Drehachsen 355 und 365 der Ovalräder 150 und 160 ausgeformt ist. Ferner ist in Figur 3 explizit erkennbar, dass sich die Längsachse 375 der Rille 170 entlang einer Durchflussachse des Prozessmediums durch die Messkammer 120 zwischen dem Einlassabschnitt 130 und dem Auslassabschnitt 140 erstreckt. Als Durchflussachse ist hier lediglich eine den Einlassabschnitt (130) mit dem Auslassabschnitt (140) verbindende Durchflussmesserlängsachse gemeint und bezieht sich nicht auf die lokale Fließrichtung des Prozessmediums innerhalb der Messkammer. Das Prozessmedium strömt hier tatsächlich - in an sich für Ovalrad-Durchflussmesser bekannter Weise - wie durch die Pfeile 450 bzw. 460 angedeutet abwechselnd um die beiden sich drehenden Ovalräder 150, 160 auf deren dem jeweils anderem Ovalrad 160, 150 fernliegenden Seite herum. Gemäß dem hier dargestellten Ausführungsbeispiel der vorliegenden Erfindung ist die Rille 170 mittig zwischen den Drehachsen 355 und 365 der Ovalräder 150 und 160 ausgeformt.

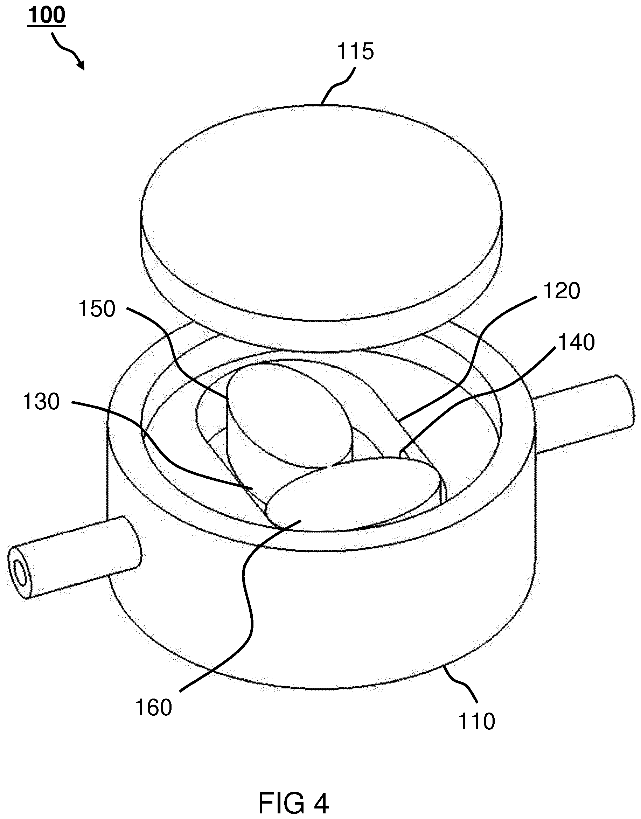

Figur 4 zeigt den Ovalrad-Durchflussmesser 100 aus Figur 1, Figur 2 bzw. Figur 3. Dabei ist in Figur 4 der Ovalrad-Durchflussmesser 100 in einer relativ zu Figur 1, Figur 2 bzw. Figur 3 veränderten Perspektive und/oder Darstellungsweise gezeigt.

Unter Bezugnahme auf die Figuren 1 bis 4 sei zusammenfassend und mit anderen Worten angemerkt, dass somit oberhalb oder ggf. unterhalb der Ovalräder 150 und 160 eine definierte Rille 170 eingebracht ist. In der Messkammer 120 des Ovalrad-Durchflussmessers 100, die eng bemessene Toleranzen aufweisen kann, wirkt die Rille 170 wie ein Bypass für gegenüber flüssigen Medien flüchtigere Luft oder andere Gase. Die Rille 170 ist so ausgelegt und positioniert, dass sich die Messgröße (Impulse) der Erfassungsseinsrichtung zwischen gasförmigen und flüssigen Medien in ausreichendem Maße ändert, sodass durch eine externe Steuerung, beispielsweise eine nachfolgend beschriebene Steuervorrichtung, diese Abweichung berechnet bzw. erkannt werden kann. Eine Auslegung der Rille 170 hinsichtlich Abmessungen ist an eine jeweilige Anwendung (Durchfluss-, Viskositätsbereich und geforderte Genauigkeit) anpassbar bzw. angepasst. So kann eine Längenabmessung der Rille 170 so gewählt sein, dass in jeder Stellung der Ovalräder 150 und 160 mindestens ein Durchgang zwischen Ein- und Ausgangsseite bzw. zwischen dem Einlassabschnitt 130 und dem Auslassabschnitt 140 besteht. Beispielsweise kann die Längenabmessung der Rille 170 etwa zwei Drittel einer Abmessung der Messkammer 120 in Fließrichtung betragen. Beispielhafte Abmessungen für eine Tiefe der Rille 170 können 0,5 bis 3 Millimeter und für eine Breite 0,5 bis 5 Millimeter betragen, wobei diese Angaben für einen Durchflussbereich von etwa 50 - 200 mL/min und einen Viskositätsbereich von etwa 1 - 50 mPas gelten.

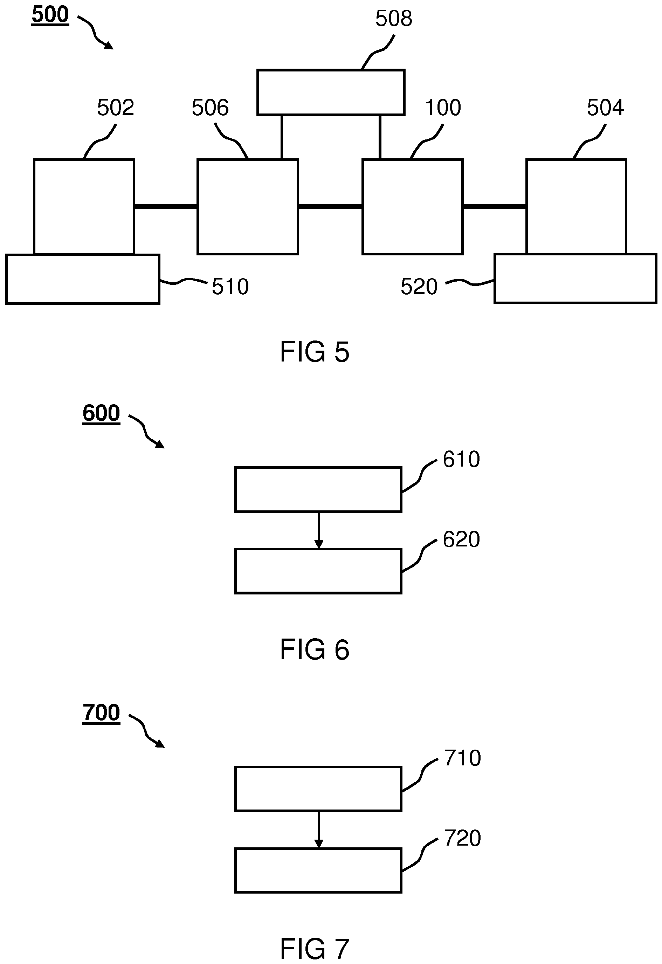

Figur 5 zeigt ein Dosiersystem 500 gemäß einem Ausführungsbeispiel der vorliegenden Erfindung. Das Dosiersystem 500 ist lediglich beispielhaft für einen Reinigungs- und Desinfektionsautomaten vorgesehen.

Das Dosiersystem 500 weist eine Aufnahmeschnittstelle 502, eine Abgabeschnittstelle 504, eine Dosierpumpe 506, eine Steuervorrichtung 508 und einen Ovalrad-Durchflussmesser 100 auf. Der Ovalrad-Durchflussmesser 100 entspricht oder ähnelt dem Ovalrad-Durchflussmesser aus einer der vorstehend beschriebenen Figuren. Die Steuervorrichtung 508 ist ausgebildet, um das in Figur 7 beschriebene Verfahren zum Messen oder ein ähnliches Verfahren auszuführen.

Die Aufnahmeschnittstelle 502 repräsentiert eine Schnittstelle zu mindestens einem Vorratsbehälter 510 zum Beinhalten von Prozessmedium. Beispielsweise ist die Aufnahmeschnittstelle 502 als eine Sauglanze oder dergleichen ausgeführt. Bei dem Vorratsbehälter 510 kann es sich auch um einen Kanister oder dergleichen mit Prozesschemikalien handeln, beispielsweise Reiniger oder Neutralisationsmittel. Die Abgabeschnittstelle 504 repräsentiert eine Schnittstelle zu einem Prozessraum 520 zum Verarbeiten von Prozessmedium. Beispielsweise ist die Abgabeschnittstelle 504 als ein Dosierstutzen oder dergleichen ausgeführt. Bei dem Prozessraum 520 kann es sich um einen Spülraum eines Reinigungs- und Desinfektionsautomaten handeln.

Die Dosierpumpe 506 ist ausgebildet, um Prozessmedium von der Aufnahmeschnittstelle 502 zu der Abgabeschnittstelle 504 zu fördern. Hierbei ist die Dosierpumpe 506 ist ausgebildet, um Prozessmedium von der Aufnahmeschnittstelle 502 durch den Ovalrad-Durchflussmesser 100 hindurch zu der Abgabeschnittstelle 504 zu fördern.

Der Ovalrad-Durchflussmesser 100 ist strömungsmechanisch mit der Aufnahmeschnittstelle 502 und der Abgabeschnittstelle 504 verbunden. Gemäß dem in Figur 5 dargestellten Ausführungsbeispiel der vorliegenden Erfindung sind die Dosierpumpe 506 und der Ovalrad-Durchflussmesser 100 strömungsmechanisch zwischen die Aufnahmeschnittstelle 502 und die Abgabeschnittstelle 504 geschaltet. Hierbei ist der Ovalrad-Durchflussmesser 100 zwischen der Dosierpumpe 506 und der Abgabeschnittstelle 504 angeordnet.

Die Steuervorrichtung 508 ist signalübertragungsfähig mit dem Ovalrad-Durchflussmesser 100 und mit der Dosierpumpe 506 verbunden.

Figur 6 zeigt ein Verfahren 600 zum Herstellen gemäß einem Ausführungsbeispiel der vorliegenden Erfindung. Durch Ausführen des Verfahrens 600 zum Herstellen ist ein Ovalrad-Durchflussmesser zum Messen eines Durchflusses zumindest eines Prozessmediums in einem Dosiersystem herstellbar. Genauer gesagt ist durch Ausführen des Verfahrens 600 zum Herstellen der Ovalrad-Durchflussmesser aus einer der vorstehend beschriebenen Figuren oder ein ähnlicher Ovalrad-Durchflussmesser herstellbar.

In einem Schritt 610 des Bereitstellens werden bei dem Verfahren 600 zum Herstellen ein Gehäuse, in dem eine Messkammer, ein Einlassabschnitt und ein Auslassabschnitt ausgeformt sind, zwei in der Messkammer zwischen dem Einlassabschnitt und dem Auslassabschnitt drehbar gelagerte Ovalräder und eine Erfassungseinrichtung zum Erfassen einer Stellung der Ovalräder bereitgestellt. In einem Schritt 620 des Ausformens wird bei dem Verfahren 600 zum Herstellen eine der Messkammer zugewandte Rille in zumindest einem Gehäuseteil oder Teilabschnitt des Gehäuses ausgeformt. Hierbei wird die Rille zwischen Drehachsen der Ovalräder ausgeformt, wobei sich eine Längsachse der Rille entlang einer Durchflussachse des Prozessmediums durch die Messkammer zwischen dem Einlassabschnitt und dem Auslassabschnitt erstreckt.

Gemäß einem Ausführungsbeispiel wird im Schritt 620 des Ausformens die Rille mit von einer Viskosität und/oder einem Volumenstrom des zumindest einen Prozessmediums abhängigen Abmessungen ausgeformt.

Figur 7 zeigt ein Verfahren 700 zum Messen eines Durchflusses zumindest eines Prozessmediums in einem Dosiersystem gemäß einem Ausführungsbeispiel der vorliegenden Erfindung. Hierbei ist das Verfahren 700 zum Messen in Verbindung mit dem Dosiersystem aus Figur 5 oder einem ähnlichen Dosiersystem ausführbar. Insbesondere ist das Verfahren 700 zum Messen unter Verwendung der Steuervorrichtung sowie des Ovalrad-Durchflussmessers aus Figur 5 oder ähnlicher Elemente ausführbar.

In einem Schritt 710 des Bewirkens wird bei dem Verfahren 700 zum Messen eine Förderung zumindest eines Prozessmediums durch den Ovalrad-Durchflussmesser bewirkt. Ferner wird in einem Schritt 720 des Auswertens bei dem Verfahren 700 zum Messen ein Messsignal von der Erfassungseinrichtung des Ovalrad-Durchflussmessers ausgewertet. Das Messsignal repräsentiert eine dem Durchfluss des zumindest einen Prozessmediums zugeordnete Drehbewegung der Ovalräder.

Gemäß einem Ausführungsbeispiel wird im Schritt 720 des Auswertens anhand eines Abfalls des Messsignals bei konstanter Fördermenge ein Vorhandensein von Gas in einem flüssigen Prozessmedium erkannt.

Unter Bezugnahme auf die Figuren 1 bis 7 wird nachfolgend eine Funktionsbeschreibung des Dosiersystems 500 für flüssige Prozessmedien in einem Reinigungs- und Desinfektionsautomat abgegeben. Demnach werden flüssige Prozesschemikalien, z. B. Reiniger oder Neutralisationsmittel, in Reinigungs- und Desinfektionsautomaten in der Regel über interne oder externe Dosiersysteme 500 zugefügt. Die Dosierpumpe 506 saugt dabei ein flüssiges Medium über Schlauchleitungen und eine Sauglanze 502 aus einem Kanister bzw. Vorratsbehälter 510. Zwischen Dosierpumpe 506 und Spülraum 520 des Endgerätes (Dosierstutzen/freier Auslauf) ist der Ovalrad-Durchflussmesser 100 als Durchflussmesser bzw. Durchflusssensor in die Schlauchleitung eingesetzt. In dem Ovalrad-Durchflussmesser 100 sind zwei Ovalräder 150 und 160 verbaut, in die zumindest ein oder jeweils ein Magnet eingearbeitet ist. Fließt ein Medium durch den Ovalrad-Durchflussmesser 100, drehen sich die beiden Ovalräder 150 und 160 und regen eine beispielsweise als Hall-Sensor ausgeführte Erfassungsvorrichtung an. Der Hall-Sensor gibt entsprechend der Umdrehungen der Ovalräder 150 und 160 dann Impulse an die Steuervorrichtung 508 bzw. Gerätesteuerung aus. Die Steuervorrichtung 508 errechnet aus diesen Impulsen ein Volumen und vergleicht diesen Wert mit dem vorgegebenen Soll-Wert. Der Ovalrad-Durchflussmesser 100 zeichnet sich durch eine hohe Genauigkeit und hohe Viskositätsunabhängigkeit aus. Gelangt Luft in das Dosiersystem 500, z. B. durch Undichtigkeiten oder sonstige Fehlerfälle, wird diese ebenfalls durch den Ovalrad-Durchflussmesser 100 gefördert und kann durch die Rille 170 hindurch strömen. Somit drehen sich die Ovalräder 150 und 160 bei Luftförderung mit einer anderen Drehzahl als bei reiner Flüssigkeitsförderung. Eine Anzahl ausgegebener Impulse wendet sich und die Steuervorrichtung 508 berechnet ein Gesamtvolumen, das trotz der Luft einem tatsächlichem Flüssigkeitsvolumen entspricht. Durch die Rille 170 verringert sich die Anzahl der Impulse bei der Förderung von Luft. Im Verhältnis zu einem Dosiervorgang mit einem vollständig flüssigkeitsgefüllten Dosiersystem 500, brechen die Impulse derart ein, dass durch die Steuervorrichtung 508 eine Unterdosierung errechnet werden kann. Bei dem Ovalrad-Durchflussmesser 100 ist bei Luftförderung ein Einbruch der Impulse von beispielsweise 50 Prozent bis 100 Prozent angestrebt. Wird beispielsweise ein Flüssigkeitsvolumen von 100 mL dosiert und es befindet sich eine Luftblase von 1 mL in diesem Volumen, können die Impulse für den Luftanteil um mindestens 50 Prozent einbrechen. Demnach werden durch den Ovalrad-Durchflussmesser 100 mindestens 0,5 Prozent weniger Impulse als ohne Luftblase ausgegeben. Wird also durch einen Anteil an Luft bzw. Luftblasen das geförderte Volumen eines flüssigen Prozessmediums reduziert, so wird dies durch den Ovalrad-Durchflussmesser 100 über eine Änderung der ausgegebenen Messgröße im Vergleich zu einem nur aus flüssigem Medium bestehendem Volumen zuverlässig erkannt. Bei der Dosierung von Prozesschemikalien in Reinigungs- und Desinfektionsgeräten kann neben einer hohen Genauigkeit auch eine Erkennung von Fehlerfällen realisiert werden. Gelangt z. B. Luft in das Dosiersystem 500 und wird diese während eines Dosiervorganges zusammen mit dem Prozessmedium in einen Spülprozess dosiert, so kann die Steuervorrichtung 508 bei Unterschreiten eines bestimmten Volumens des flüssigen Mediums einen Fehler erkennen.

## Patentansprüche

1. Ovalrad-Durchflussmesser (100) zum Messen eines Durchflusses zumindest eines Prozessmediums in einem Dosiersystem (500), wobei der Ovalrad-Durchflussmesser (100) ein Gehäuse (110, 115), in dem eine Messkammer (120), ein Einlassabschnitt (130) und ein Auslassabschnitt (140) ausgeformt sind, zwei in der Messkammer (120) zwischen dem Einlassabschnitt (130) und dem Auslassabschnitt (140) drehbar gelagerte Ovalräder (150, 160) und eine Erfassungseinrichtung zum Erfassen einer Stellung der Ovalräder (150, 160) aufweist, wobei in zumindest einem Gehäuseteil (115) oder Teilabschnitt des Gehäuses (110, 115) eine der Messkammer (120) zugewandte Rille (170) ausgeformt ist, **dadurch gekennzeichnet, dass** die Rille (170) zwischen Drehachsen (355, 365) der Ovalräder (150, 160) ausgeformt ist, wobei sich eine Längsachse (375) der Rille (170) entlang einer den Einlassabschnitt (130) mit dem Auslassabschnitt (140) verbindenden Durchflussmesserlängsachse zwischen dem Einlassabschnitt (130) und dem Auslassabschnitt (140) erstreckt, und wobei eine Längenabmessung der Rille (170) so gewählt ist, dass durch die Rille (170) eine gasdurchlässige Verbindung zwischen dem Einlassabschnitt (130) und dem Auslassabschnitt (140) bereitgestellt ist.

2. Ovalrad-Durchflussmesser (100) gemäß Anspruch 1, **dadurch gekennzeichnet, dass** die Rille (170) mittig zwischen den Drehachsen (355, 365) der Ovalräder (150, 160) ausgeformt ist.

3. Ovalrad-Durchflussmesser (100) gemäß einem der vorangegangenen Ansprüche, **dadurch gekennzeichnet, dass** eine Längenabmessung der Rille (170) so gewählt ist, dass durch die Rille (170) unabhängig von der Stellung der Ovalräder (150, 160) eine gasdurchlässige Verbindung zwischen dem Einlassabschnitt (130) und dem Auslassabschnitt (140) bereitgestellt ist.

4. Ovalrad-Durchflussmesser (100) gemäß einem der vorangegangenen Ansprüche, **dadurch gekennzeichnet, dass** die Rille (170) in einem Deckelteil (115) und/oder in einem Bodenteil des Gehäuses (110, 115) ausgeformt ist.

5. Ovalrad-Durchflussmesser (100) gemäß einem der vorangegangenen Ansprüche, **dadurch gekennzeichnet, dass** die Rille (170) mit von einer Viskosität und/oder einem Volumenstrom des zumindest einen Prozessmediums abhängigen Abmessungen ausgeformt ist.

6. Verfahren (700) zum Messen eines Durchflusses zumindest eines Prozessmediums in einem Dosiersystem (500), **dadurch gekennzeichnet, dass** das Verfahren (700) zumindest folgende Schritte aufweist:
Bewirken (710) einer Förderung zumindest eines Prozessmediums durch einen Ovalrad-Durchflussmesser (100) gemäß einem der Ansprüche 1 bis 5; und
Auswerten (720) eines Messsignals von der Erfassungseinrichtung des Ovalrad-Durchflussmessers (100), wobei das Messsignal eine dem Durchfluss des zumindest einen Prozessmediums zugeordnete Drehbewegung der Ovalräder (150, 160) repräsentiert.

7. Verfahren (700) gemäß Anspruch 6, **dadurch gekennzeichnet, dass** im Schritt (720) des Auswertens anhand eines Abfalls des Messsignals bei konstanter Fördermenge ein Vorhandensein von Gas in einem flüssigen Prozessmedium erkannt wird.

8. Dosiersystem (500), **dadurch gekennzeichnet, dass** das Dosiersystem (500) zumindest folgende Merkmale aufweist:
eine Aufnahmeschnittstelle (502) zu mindestens einem Vorratsbehälter (510) zum Beinhalten von Prozessmedium;
eine Abgabeschnittstelle (504) zu einem Prozessraum (520) zum Verarbeiten von Prozessmedium;
eine Dosierpumpe (506) zum Fördern von Prozessmedium von der Aufnahmeschnittstelle (502) zu der Abgabeschnittstelle (504);
einen Ovalrad-Durchflussmesser (100) gemäß einem der Ansprüche 1 bis 5, wobei der Ovalrad-Durchflussmesser (100) strömungsmechanisch mit der Aufnahmeschnittstelle (502) und der Abgabeschnittstelle (504) verbindbar oder verbunden ist; und
eine Steuervorrichtung (508) um die Schritte des Verfahrens (700) gemäß einem der Ansprüche 6 bis 7 auszuführen, wobei die Steuervorrichtung (508) zumindest mit dem Ovalrad-Durchflussmesser (100) signalübertragungsfähig verbindbar oder verbunden ist.

## Claims

1. Oval wheel flow meter (100) for measuring a flow of at least one process medium in a dispensing system (500), the oval wheel flow meter (100) comprising a housing (110, 115) in which a measuring chamber (120), an inlet portion (130) and an outlet portion (140) are formed, two oval wheels (150, 160) which are rotatably mounted in the measuring chamber (120) between the inlet portion (130) and the outlet portion (140), and a detecting means for detecting a position of the oval wheels (150, 160), a groove (170) facing the measuring chamber (120) being formed in at least one housing part (115) or portion of the housing (110, 115), **characterised in that** the groove (170) is arranged between axes of rotation (355, 365) of the oval wheels (150, 160), a longitudinal axis (375) of the groove (170) extending between the inlet portion (130) and the outlet portion (140) along a flow meter longitudinal axis connecting the inlet portion (130) to the outlet portion (140), and a longitudinal dimension of the groove (170) being selected such that a gas-permeable connection is provided between the inlet portion (130) and the outlet portion (140) by means of the groove (170).

2. Oval wheel flow meter (100) according to claim 1, **characterised in that** the groove (170) is formed centrally between the axes of rotation (355, 365) of the oval wheels (150, 160).

3. Oval wheel flow meter (100) according to either of the preceding claims, **characterised in that** a longitudinal dimension of the groove (170) is selected such that a gas-permeable connection is provided between the inlet portion (130) and the outlet portion (140) by means of the groove (170) regardless of the position of the oval wheels (150, 160).

4. Oval wheel flow meter (100) according to any of the preceding claims, **characterised in that** the groove (170) is formed in a cover part (115) and/or in a base part of the housing (110, 115).

5. Oval wheel flow meter (100) according to any of the preceding claims, **characterised in that** the groove (170) is formed having dimensions that are dependent on a viscosity and/or a volume flow rate of the at least one process medium.

6. Method (700) for measuring a flow of at least one process medium in a dispensing system (500), **characterised in that** the method (700) comprises at least the following steps:
bringing about (710) delivery of at least one process medium by means of an oval wheel flow meter (100) according to any of claims 1 to 5; and
evaluating (720) a measurement signal from the detecting means of the oval wheel flow meter (100), the measurement signal representing a rotational movement of the oval wheels (150, 160) associated with the flow of the at least one process medium.

7. Method (700) according to claim 6, **characterised in that** in the step (720) of evaluation, the presence of gas in a liquid process medium is detected on the basis of a drop of the measuring signal at a constant delivery rate.

8. Dispensing system (500), **characterised in that** the dispensing system (500) comprises at least the following features:
a receiving interface (502) to at least one storage container (510) for containing process medium;
an output interface (504) to a process space (520) for processing process medium;
a dispensing pump (506) for delivering process medium from the receiving interface (502) to the output interface (504);
an oval wheel flow meter (100) according to any of claims 1 to 5, the oval wheel flow meter (100) being fluidically connectable or connected to the receiving interface (502) and the output interface (504); and
a control device (508) for carrying out the steps of the method (700) according to any of claims 6 to 7, the control device (508) being connectable or connected to at least the oval wheel flow meter (100) so as to be able to transmit signals.

## Revendications

1. Débitmètre à roue ovale (100) pour la mesure d'un débit d'au moins un fluide de traitement dans un système de dosage (500), ledit débitmètre à roue ovale (100) comportant un boîtier (110, 115) dans lequel une chambre de mesure (120), une section d'entrée (130) et une section de sortie (140) sont formées, deux roues ovales (150, 160) montées en rotation dans la chambre de mesure (120) entre la section d'entrée (130) et la section de sortie (140), et un moyen de détection pour la détection d'une position des roues ovales (150, 160), une rainure orientée (170) vers la chambre de mesure (120) étant formée dans au moins une partie de boîtier (115) ou dans une section partielle du boîtier (110, 115), **caractérisé en ce que** la rainure (170) est formée entre les axes de rotation (355, 365) des roues ovales (150, 160), un axe longitudinal (375) de la rainure (170) s'étendant, entre la section d'entrée (130) et la section de sortie (140), suivant un axe longitudinal de débitmètre reliant la section d'entrée (130) à la section de sortie (140), et une dimension en longueur de la rainure (170) est sélectionnée de telle manière qu'une liaison perméable aux gaz soit prévue entre la section d'entrée (130) et la section de sortie (140) à travers la rainure (170).

2. Débitmètre à roue ovale (100) selon la revendication 1, **caractérisé en ce que** la rainure (170) est formée au centre entre les axes de rotation (355, 365) des roues ovales (150, 160).

3. Débitmètre à roue ovale (100) selon l'une des revendications précédentes, **caractérisé en ce qu'**une dimension longitudinale de la rainure (170) est sélectionnée de telle manière qu'une liaison perméable aux gaz soit prévue entre la section d'entrée (130) et la section de sortie (140) à travers la rainure (170), indépendamment de la position des roues ovales (150, 160).

4. Débitmètre à roue ovale (100) selon l'une des revendications précédentes, **caractérisé en ce que** la rainure (170) est formée dans une partie de couvercle (115) et/ou dans une partie de fond du boîtier (110, 115).

5. Débitmètre à roue ovale (100) selon l'une des revendications précédentes, **caractérisé en ce que** la rainure (170) est formée avec des dimensions dépendantes d'une viscosité et/ou d'un débit volumique de l'au moins un fluide de traitement.

6. Procédé (700) de mesure d'un débit d'au moins un fluide de traitement dans un système de dosage (500), **caractérisé en ce que** le procédé (700) comprend au moins les étapes suivantes :
distribution (710) d'au moins un fluide de traitement à travers un débitmètre à roue ovale (100) selon l'une des revendications 1 à 5 ; et
évaluation (720) d'un signal de mesure provenant du moyen de détection du débitmètre à roue ovale (100), le signal de mesure représentant un mouvement de rotation des roues ovales (150, 160) associé au débit de l'au moins un fluide de traitement.

7. Procédé (700) selon la revendication 6, **caractérisé en ce que**, à l'étape (720) d'évaluation, une présence de gaz dans un fluide de traitement liquide est détectée grâce à une chute du signal de mesure pour un débit constant.

8. Système de dosage (500), **caractérisé en ce que** le système de dosage (500) présente au moins les caractéristiques suivantes :
une interface d'entrée (502) vers au moins un réservoir (510) destiné à contenir le fluide de traitement ;
une interface de sortie (504) vers un espace de traitement (520) destiné au traitement du fluide de traitement ;
une pompe de dosage (506) pour le transport du fluide de traitement de l'interface d'entrée (502) vers l'interface de sortie (504) ;
un débitmètre à roue ovale (100) selon l'une des revendications 1 à 5, le débitmètre à roue ovale (100) pouvant être relié mécaniquement par écoulement à l'interface d'entrée (502) et à l'interface de sortie (504) ou étant relié à celles-ci ; et
un dispositif de commande (508) pour la réalisation des étapes du procédé (700) selon l'une des revendications 6 à 7, le dispositif de commande (508) pouvant être relié au moins au débitmètre à roue ovale (100) ou étant relié à celui-ci de manière à pouvoir transmettre des signaux.
